# EUROPEAN PATENT SPECIFICATION

(11) **EP 3 487 294 B1**
(45) Date of publication and mention of the grant of the patent: **20.09.2023**
(21) Application number: 17752188.7
(22) Date of filing: 19.07.2017
(51) Int. Cl.: A01M 13/00, A01G 9/24, A23B 7/144

(54) **FOGGING APPARATUS**
VERNEBELUNGSEINRICHTUNG
BRUMISATEUR

(30) Priority: 21.07.2016 NL 1041991
(43) Date of publication of application: 29.05.2019
(73) Proprietor: Frans Veugen Bedrijfshygiëne B.V., 6031 TW Nederweert (NL); Veugen, Rob Andries, 6031 TW Nederweert (NL); Veugen, Paul Martin, 6031 TW Nederweert (NL)
(72) Inventor: VEUGEN, Rob Andries, 6031 RK Nederweert (NL); VEUGEN, Paul Martin, 6031 TW Nederweert (NL)
(74) Representative: Keij, Joep Johannes Alphonsus Maria
(86) International application number: PCT/NL2017/000011
(87) International publication number: WO 2018/016941

(56) References cited:
- GB-A- 2 194 441
- GB-A- 2 318 294
- US-A- 2 765 578
- US-A- 4 226 179

## Description

Fogging apparatus for atomizing a medium comprising an atomizer chamber defined by an atomizer chamber wall extending substantially from a supply side to a distal outlet side, further comprising at least one supply located at the supply side of the atomizer chamber for dispensing the medium to be atomized and an air supply duct extending from an air flow source to an air supply opening on the supply side of the atomizer chamber, the air flow source being adapted to, in operation, generate an air flow. The present invention also relates to an agricultural storage facility for agricultural products and an agricultural crop nursery equipped with such a fogging apparatus.

A fogging apparatus for the atomization of a medium such as referred to in the preamble is often used in a variety of situations in which liquids in a fine fog are to be included in an air flow, such as, for example, in agriculture and horticulture, transportation and medical environments. In many cases a medium will be used in which an active ingredient is included in a carrier liquid. The atomization herein is intended specifically to homogeneous and fine distribution and dosage of the active ingredient.

Such a device is known from US patent US3239960 of Stevens. Herein, a fogging apparatus is shown in which by means of igniting a fuel in an air stream injected into a combustion chamber a stream of combustion gases are forced through a barrel towards a downstream thereof situated outlet. For a more homogeneous flow of this - stream of combustion gases, the combustion gases are radially deflected by means of several baffles in the combustion chamber. In the outlet a centrally located nozzle is disposed therein, which sprays a medium in liquid form containing an active ingredient. Due to the elevated temperature of the combustion gases and, as a result thereof an increased temperature of the outlet, a mist of fine particles of the medium forms in the flow of combustion gases. This fog then leaves the device via an outlet downstream in the exhaust.

Although the known atomizing device is able to atomize a relatively high volume of medium per time unit, however there are also a number of disadvantages to this known apparatus. In particular, the homogeneity of the particle size and the distribution of the medium with an active ingredient is a disadvantage of the known atomizing device, in particular during the warm-up phase of the device. In addition, a combustion-based device requires a number of specific measures for preventing recoil, unwanted explosions and other security measures, which make the overall construction relatively complex.

Furthermore, it is known from patent application GB 2318294, to lead by means of a methanol burner heated air around an atomizing chamber. Herein the supplied air is supplied at the output side of the atomizer, on the opposite side with respect to the nozzle, such that the atomized medium downstream of the nozzle is carried along with the supplied air.

Furthermore, it is known from US patent application US 2765578 to pass heated air along an atomizer, with the air supply to be fed at a certain distance downstream of the nozzle to the atomized medium.

The present invention thus, inter alia aims to provide a fogging apparatus which mitigates these mentioned objections.

In order to achieve the stated objective a fogging apparatus according to the invention is characterized in that the air flow is fed through an air heating unit into the air supply duct and wherein at least a portion of the air supply duct is configured to be in a heat exchange contact with the atomizer chamber wall. The air flow source can, moreover, be provided as an active element in the air supply, such as an air pump, but it may also be provided as a coupling-in of air pressure generated elsewhere, such as a compressed air installation or external compressor. The atomizer chamber wall by various effects will show an uneven temperature distribution, in particular by, for example, a non-uniform contact with the medium to be atomized. Even if it is possible to inject a medium with the aid of a very finely distributing nozzle into the atomizer, for example, the orientation of the device relative to the gravitational field, a portion of the atomizer chamber wall may get into contact with somewhat more medium in a liquid form. This may lead to so-called cold spots. In these cold spots, where the temperature of the atomizer chamber wall is locally lower than in the rest of the atomizer, a less effective atomization of the medium may occur. As a result, a non-uniformity in the particle size of the spray may arise. By bringing the atomizer chamber wall in a heat-exchanging contact with the air supply duct, through which a heated air flow, heated by an air-heating unit flows, the homogeneity of the temperature of the atomizer chamber wall can be increased. This heat-exchanging contact provides an additional supply of thermal energy in addition to the thermal energy received by the atomizer chamber wall from the primary air flow through the atomizer chamber. This has a positive effect on the homogeneity of the particle size in the outgoing generated fog and on the distribution of the active ingredient across this fog. The air supply duct extends from an air stream source to an air supply opening on the supply side of the atomizer. The air is supplied through this air supply opening to the atomizer chamber, wherein the air supply opening is positioned behind such that the supplied air flow carries along the atomized medium.

Further, the air supply duct comprises a secondary chamber, which secondary chamber extends substantially from the supply side of the atomizing chamber in the direction of the outlet side of the atomizing chamber. This secondary chamber may be integrally formed as part of the air supply or separate from the formed part. In both cases the secondary chamber is in fluid connection with the air supply. Due to the design of the secondary chamber the flow rate of the heated air may be controlled. This influence can have an effect on the heat exchange of the heated air in the air supply to the atomizing chamber wall. Further, in one embodiment, an active flow controller may be included in this chamber in order to influence the heated air through the secondary chamber. The secondary chamber may be in heat-exchanging contact over its entire length, a portion thereof or even a specific part of the atomizer chamber. The secondary chamber may extend linearly along the atomizer chamber, spiral around the chamber, or, for example, enclose the atomizer chamber in whole or partially.

A further preferred embodiment of a fogging apparatus according to the present invention is characterized in that the secondary chamber at least partially encloses the atomizing chamber. By having the secondary chamber at least partially enclose the atomizing chamber in a heat-exchanging contact, a secondary supply of thermal energy to the atomizer chamber wall may be realized by means of said heat-exchanging contact. This can result in a pre-heating of the atomizer chamber wall, but also serve as a supplemental source of thermal energy, for example to compensate for cooling, in order to reduce in-homogeneities in the warming of the atomizer chamber.

A further preferred embodiment of a fogging apparatus according to the present invention is characterized in that an inner wall of the secondary chamber is formed by the atomizing chamber wall of the atomizer chamber. In a full or partial enclosure of the atomizing chamber by the secondary chamber it may be advantageous for the exchange of thermal energy to share the intermediate wall, such that a direct heat-exchanging contact is created between the secondary chamber and the atomizing chamber. Herein the inner wall of the secondary chamber may physically be the same element as the outer wall of the atomization chamber. Not only does this offer advantages over the complexity of the structure, but it may also lead to more efficient heat transfer from the secondary chamber to the atomizing chamber.

A further preferred embodiment of a fogging apparatus according to the present invention is characterized in that the atomizer chamber and the secondary chamber are formed substantially cylindrical and are positioned substantially concentrically with respect to each other.

An axially rotation-symmetric atomizing chamber, in particular a cylindrically shaped atomizing chamber is beneficial for the course of the flow of air through the atomizing chamber and thus for the homogeneous distribution of the medium to be atomised in the air flow and the homogeneity of the droplet size.

A preferred embodiment of a fogging apparatus according to the present invention is characterized in that the supply side comprises a sealing body in which receiving means are provided for detachable receipt of the supply for dosing of the medium to be atomized. The atomizing chamber comprises a closing member at the inlet side, such as a flange or plate portion welded to close off the supply side of the atomizing chamber, such that the generated fog can escape substantially exclusively on the remote side thereof. The sealing body comprises a receiving means such as screw threads, bayonet-type body, or other receiving means for the releasable receipt of a supply line for supplying the medium to be atomized by the closing body towards the atomizing chamber. It is beneficial for the homogeneity of the fog that the medium to be atomized is sprayed into the air stream of heated air, which is forced through the atomization chamber. By providing the supply detachably in the sealing body, the inlet or supply, in particular the spraying part of the supply, may be adapted to a specific medium or to a specific condition. In general the medium comprises an active substance dissolved or dispersed. The fluid properties of the medium to be atomized may vary by, inter alia, the concentration of the active substance dissolved or dispersed therein, but also by environmental factors such as temperature. A releasable receipt of the supply allows for flexibility in applying substances and conditions into the apparatus. In addition, the opening in which the supply is receivable, also provides the possibility to access to the supply side of the atomizing chamber for, for example maintenance and / or cleaning of the atomizing chamber.

A preferred embodiment of a fogging apparatus according to the present invention is characterized in that the feed comprises a spray nozzle. This spray nozzle distributes the medium to be atomized into a fine spray which is picked up in the heated air stream, so that a fine fog may develop in the atomizing chamber. Here, the nozzle provides the medium in the atomizing chamber in drops with a typical average droplet diameter of 10-1000 microns, preferably 50-200 microns. Due to the injection of the medium to be atomized in a spray through the spray nozzle of the supply, the spray may form with less thermal energy in comparison with, for example, a supply in higher density.

A preferred embodiment of a fogging apparatus according to the present invention is characterized in that the outlet side comprises at least one aperture which is connected to a substantially cylindrically extending fog outlet. By the use of a spray outlet which is located downstream with respect to the atomization chamber, a further homogeneity can be reached before the generated fog leaves the apparatus. In addition, the fog outlet can be designed in length and gradient, such that the fog can reach a desired position. By means of the fog outlet, for example, being formed in a curve, the mist can be introduced under a certain angle. The fog outlet may be provided at its outlet with coupling means for coupling to a device, assembly or distribution station for further processing or application of the generated fog.

A further preferred embodiment of a fogging apparatus according to the present invention is characterized in that the fog outlet is tapered at least once. By means of tapering the fog outlet, the outflow velocity of the spray as well as the density of the generated mist can be influenced.

A preferred embodiment of a fogging apparatus according to the present invention is characterized in that the supply is connected via a supply channel to a supply unit, from which by means of a pump device, a quantity of medium to be atomized can be supplied to the atomizing chamber. An active or active substance may be incorporated already in the medium to be atomized, but can be designed also in such a way that it is to be atomized medium without the active substance is stored in the storage unit, in which the active or active substance is added later, dissolved and / or dispersed after pumping it from the storage unit but prior to the atomization. The storage unit may also be provided with a buffer unit from which the medium to be atomized is pumped, while the medium is supplied batch-wise, or continuously to the buffer unit, such that the atomizer can provide a continuous or more prolonged production of spray. The supply unit of an integral part of the apparatus, or be designed as a detachable part of the device, for example as a cartridge, replaceable keg or tank.

A further preferred embodiment of a fogging apparatus according to the present invention is characterized in that the supply unit comprises a quantity of medium to be atomized, wherein the medium is chosen from the group consisting of anti-sprout agent, plant protection agent, disinfectant and pesticide. The apparatus is particularly advantageous to apply for the atomization of anti-sprout agent, plant protection agent, disinfectant and/or pesticide, in that these substances in pure form, dissolved or dispersed in the medium to be atomized may be distributed extremely homogeneous and allows atomizing with homogeneous droplet size in the apparatus. It is in some cases important to distribute the active agents such as not to locally create an excessive or under moderate dosing. In addition, a homogeneous droplet size is important for uniform penetration into a surrounding area. In particular, a stack of harvested tuberous crop products, such as potatoes for the application of an anti-sprout agent.

A preferred embodiment of a fogging apparatus according to the present invention, is characterized in that it further comprises an electronic control unit, which control unit generates a control signal based on at least a temperature signal, to control at least one of an air flow velocity, an air flow temperature and a supply velocity of the medium to be atomized. By controlling the air flow rate, the air flow temperature and / or the feed rate of the medium to be atomized on the basis of a signal which is related to the temperature signal, such as the temperature of the atomizing chamber, the temperature of the atomizing chamber wall, the temperature of the supplied air flow, and / or the temperature of the outgoing fog, the quality of the outlet spray may be influenced and controlled. In addition to this temperature-related signal other signals may still be used for the generation of the control signal. Signals to and from the control unit may be offered in various forms, such as analog or digital. In addition, the control unit may be configured as a single physical unit, such as a control box, but it may as well be designed as a distributed system distributed with functional elements over various locations in or at the device. Communication of these signals may be implemented using a wired network, but can also be implemented wirelessly. The control unit may form a physical unit with the atomizing device, but it can also be designed as a separate unit in the vicinity of or at a distance from the atomizing device. The control unit may be arranged for a single atomizing device, but it may also serve a number of atomizing devices, for example in a central control center.

A further preferred embodiment of a fogging apparatus according to the present invention, is characterized in that the electronic control unit is configured such that during the initialization of the fogging apparatus, the air heating unit is switched on to substantially maximum power, the air flow source is switched on to a sub maximum power, wherein the air flow velocity is increased during the warmup of the fogging apparatus and wherein the supply of the medium to be atomized is switched on before the maximum temperature is reached within the atomizer chamber. Atomizing a medium in general consumes thermal energy. By monitoring and controlling the air flow rate and the supply of the atomizing medium, a fog of high quality may already be generated during a warm-up phase of the device, or at least of a quality which complies with a set of minimum requirements, for example, within a certain range in drop size distribution or density of outgoing fog. This allows the start-up phase of the device to be reduced and productivity of the apparatus being increased.

A further preferred embodiment of a fogging apparatus according to the present invention is characterized in that a first temperature sensor is provided close to the air supply opening, and a second temperature sensor is provided in the fog outlet, preferably near the exit of the fog outlet. By application of these temperature sensors the rate of the air temperature with which the medium to be atomized is in contact may be accurately controlled, and how hot the outgoing flow of fog is. In particular, the first temperature sensor may significantly increase the security of the system, as highly flammable and inflammable types can be processed to atomizing medium, while the possibility of ignition and the associated safety risks can be reduced. Controlling the temperature of the outgoing fog may be of importance in situations in which the preservation of products plays a role and in which the ambient temperature is not allowed to rise above a set value.

Storage facility for agricultural products, in particular tuberous crop products, comprising a floor for receiving a quantity of agricultural products, which floor is provided with a ventilation grid having openings for passing a cooled airflow through the storage, characterized in that the storage space is provided with a fogging apparatus according to the invention, wherein the medium to be atomized comprises an anti-sprout agent. By circulating a cooled stream of air in which a fine mist is incorporated comprising an anti-sprout agent, the agricultural products, in particular harvested tuberous crops, such as potatoes, may be preserved a long time after harvesting. This is not only beneficial for storage and transport reasons, but this may also provide a spread of the supply of these crops, such that these products can be offered, for example at a time when prices for these products achieve a desired level. For a good penetration into the stack of agricultural crops is a fine mist is necessary such that both the products at the bottom and on top of the stock are provided with the active substance.

In a further aspect the invention also pertains to a crop nursery for agricultural crops, in particular greenhouse horticulture, characterized in that the culture space comprises at least one fogging apparatus according to the invention. By the use of one or more atomizers in a crop nursery, such as a greenhouse, the plants in the greenhouse may be protected by means of, for example, crop protection agents. Control of the fog-generating device or devices may take place from a central control unit, for example, as a function of measurements or observations of specific conditions, such as temperature or pests, at a specific time interval or in dependence on a particular growth phase of the crop. Moreover a disinfection of the culture device itself can be implemented if desired by atomizing a disinfectant, for example, after harvesting of a first amount and prior to the planting of a second crop plants.

The invention will now be further elucidated on the basis of exemplary embodiments and accompanying figures. In the figures:
Figure 1 is a schematic illustration of a fogging apparatus according to the invention;
Figure 2 is a schematic representation of a storage facility for agricultural products according to the invention;
Figure 3 is a schematic representation of a crop nursery for agricultural crops, in accordance with the present invention.

The figures are schematic in nature and are not drawn to scale. In particular, for the sake of clarity, some dimensions are exaggerated to a greater or lesser extent. Corresponding parts are designated in the figures as far as possible designated by the same reference numeral.

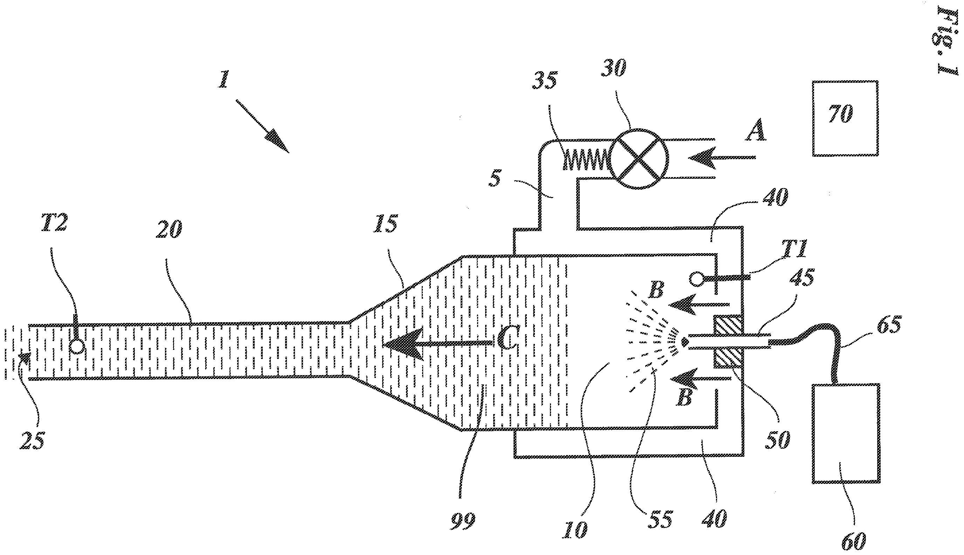

As shown in Figure 1 in an exemplary embodiment, the atomizer 1 comprises an air supply duct 5, in which an air pump 30 is provided. In an alternative embodiment, the air flow source is provided with a compressed air system with an air flow controller. The air pump 30 pumps ambient air (arrow A) through the air supply duct 5 in the direction of the atomizing chamber 10. The air supply pipe is provided with an air-heating unit 35, in this case, an electrical heating element. In an alternative embodiment, combustion-based heating elements are provided. Depending on the application, availability of electricity, air volume heating, etc a heating principle can be selected for air heating unit 35.

The air heated by the air heating unit 35 is fed into the air supply duct 5 via secondary chamber 40 to the cylindrical shaped atomizer chamber 10.

The secondary chamber 40 has been provided concentrically around the atomizing chamber 10, wherein the outer wall of the atomizing chamber 10 forms the inner wall for the secondary chamber 40. Secondary chamber 40 extends until behind the rear wall of the atomizing chamber 10. An air supply opening is provided in the rear wall of the atomizer chamber 10, such that the heated air from the air supply duct 5, is pumped into the atomizing chamber 10 as indicated by arrow B.

The back wall is provided with a supply 45 for supplying a medium to be atomized 55. The supply inlet 45 is at the side of the atomizing chamber 10 provided with a nozzle from which the medium 55 to be atomized is sprayed. The inlet 45 receives the medium to be atomized 55 via a supply hose 55 from a bulk storage keg 60 in which a controllable fluid pump device (not shown) is provided.

By switching on the medium pump device, a volume of medium to be atomized 55 is pumped from the storage tank 60 and via the supply hose 65 through the inlet 45 into the atomizing chamber and is injected in the form of a spray of medium 55. The atomizing chamber 10 and the walls of the atomizer have been provided on the highly elevated temperature by the heated air supply, such that the spray of the atomization medium 55 is carried along in the heated air stream (arrow B) by the atomizer, and an atomization takes place. This atomizes the atomizing medium 55 to a fog 99 which is entrained by the air stream along the arrow C via a tapered fog outlet 15 to the outlet 25 of the fog outlet 20.

Because the fog-generating device 1 is suitable for the atomization of different types of medium to be atomized 55, such as oil-borne or water-based types of carrier liquids to be atomized, and a variety of active ingredients and concentrations thereof, which are dissolved, dispersed or otherwise incorporated in the carrier liquid, the densities and specific atomization characteristics of the fluids to be sprayed may vary considerably. To this end, different nozzle configurations are provided for the supply 45. The supply 45 is, therefore, releasably incorporated in the rear wall of the atomizer 1 by means of screw thread 50. As a result, the desired or required supply 45 can be inserted, and the inlet supply is easily interchangeable.

**(Table 1: Examples of active substances for use in medium to be atomized)**

| **Sector** | **Application** | **Active substance** | **Example product name** |
|---|---|---|---|
| Potato | sprout inhibiting | Chloorprofam | Tuberprop |
| | | | Gro-stop |
| | | | Neonet |
| | | | Nogerma |
| | | 1,4-dimethylnaftaleen | Miscellaneous |
| Post-harvest crop protection Storage of crops, cereals, flower bulbs | sprout inhibiting | Pirimifos-methyl | Actellic |
| | | Carvon | Talent |
| Greenhouse | Crop protection | Pyrethrinen | Spruzit |
| | | Abamectin | Vertimec |
| | | Beauveria bassiana stam GHA | Botaniguard |
| | | Deltamethrin | Decis |
| Greenhouse | Disinfection | hydrogen peroxide | Desbest 400 |
| Veterinary sector | Disinfection | hydrogen peroxide | Desbest 300 |
| | | Glutaraldehyde | aldekol des FF |
| | | Quats | aldekol des FF |
| Healthcare | Disinfection | Hydrogen peroxide | Oxyl pro |

Table 1 shows a non-exhaustive number of examples of active substances which can be atomized with a carrier liquid in the fogging device according to the invention in various applications in various sectors.

The inlet 45 is arranged centrally in the rear wall of the atomizing chamber 10 containing several air supply channels through which the heated air flow from the secondary chamber 40 in the direction of arrow B, into the atomizing chamber 10. In an alternative embodiment the apparatus comprises a plurality of supply units 45 provided in the rear wall of the atomizing device 1.

The device is provided with a first temperature sensor T1 near the air supply in the atomizing chamber 1 and a second temperature sensor T2 near the exit of the fog outlet. By utilization of the first temperature sensor T1 it can be verified that the heated air is not hotter than a predetermined maximum, for example, in the case of a highly flammable medium. With the aid of temperature sensor T2, the outgoing flow of fog can be measured such that it conforms to a minimum or maximum temperature. In general, T1 is particularly used to control the air-heating unit 35, and T2 is, inter alia, used for the control of the pump for the supply of the medium to be atomized 55.

Moreover, the fog-generating device is on the outside provided with an insulation package, with the exception of the area immediately around the outlet of the spray outlet. This complete isolation of the system increases the efficiency of the atomizing device (volume to be atomized medium per consumed amount of input power) significantly. Alternatively, it is otherwise also possible to provide the insulation of the device only partially such as around the atomizer chamber and / or the spray outlet.

Electronic control unit 70 is connected with various controllable elements and measurement devices such as temperature sensors and a user interface (not shown) on which multiple setpoints can be inputted. The control unit 70 is arranged such that, during the start-up of the fogging device, the air heating unit is switched on at substantially the maximum power such that the device heats up as rapidly as possible and the air flow source is switched on at a sub maximum power. This prevents convectional cooling during the start-up phase and increases the heat transfer from the air to the walls of the atomizing chamber. Subsequently, the air flow speed is increased during the heating up of the fogging apparatus while the supply of medium to be atomized is already turned on prior to reaching the maximum temperature in the atomizing chamber. This makes it possible, shortly after the start of the warm-up phase of the device to already produce a high quality fog, i.e. a fog can be produced with a homogeneous droplet size distribution and a homogeneous distribution of the active substance.

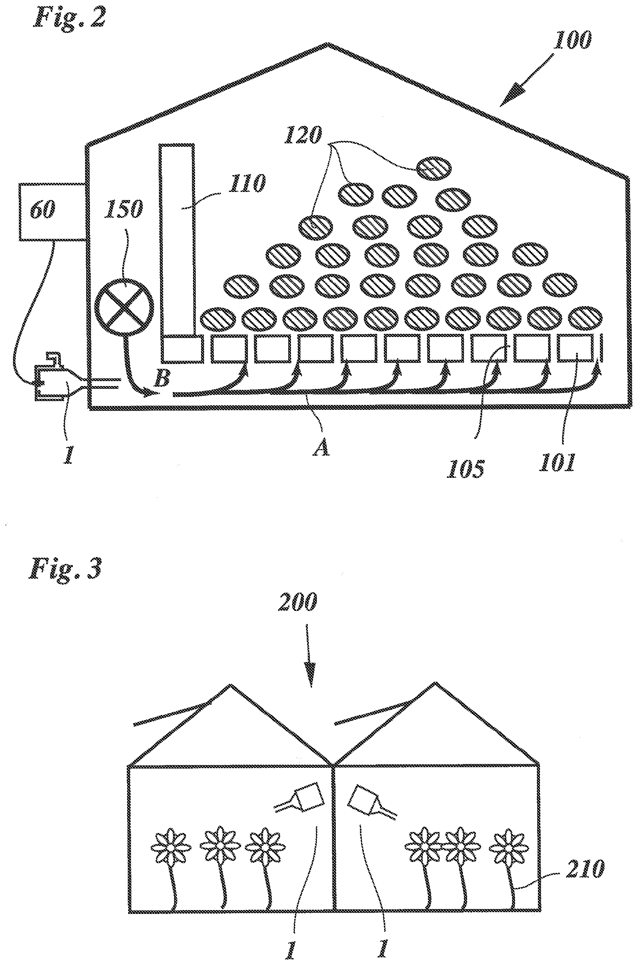

Figure 2 shows an exemplary embodiment of a storage facility 100 for agricultural products according to the invention, in particular tuberous crop products such as potatoes 120. The storage area 100 includes a wall 110 and a floor 101 for accommodating a quantity of agricultural products 120, which floor is provided with an aerating grid with openings 105 for the passage of a cooled stream of air (arrow A) through the storage space. An air conditioning system 150 circulates and cools the air in such a way that the agricultural products 120 to be cooled. The cooled air stream (arrow A) is pumped through the aeration grid 101, 105 so that the flow of air penetrating into the entire stock of agricultural products.

The atomizing device 1 is provided with an anti-sprout agent in the storage tank 60. Depending on the environmental factors, the atomizing device, as described above, is switched on at a certain time interval. As a result, the cooled air stream is provided with each time interval of a mist through which the anti-nucleating agent is distributed throughout the stack of potatoes.

Figure 3 shows an embodiment of a crop nurture or culture apparatus 200 for agricultural crops, in particular glass horticulture. The culturing space is provided with a fog generator 1 as described above. The greenhouse is provided with a support structure in which or on which sheets of glass are arranged. There are some provided with shutters which can be opened or closed. In the greenhouse are planted or sown crops 210.

The atomizer device is connected to a central storage keg (not shown) with a medium containing a plant protection product. It will be understood that other active substances may also be used successfully in this embodiment. A central control system comprises an electronic control unit 70 as described above. This control unit is connected to all atomizers fitted in the greenhouses. The central control system is also connected to the irrigation system and measures, among other things, the temperature in the greenhouses, the soil moisture, observes the growth phase of the crops and also receives information about the temperature in the atomizer chamber 10 of atomizer devices 1. As a result, the atomizer 1 is an integral part of the cultivation device 200 influencing system.

Although the invention has been explained in more detail with reference to some embodiments, it will be understood that the invention is by no means limited thereto.

## Claims

1. Fogging apparatus (1) for atomizing a medium comprising an atomizer chamber (10) defined by an atomizer chamber wall extending substantially from a supply side to a distal outlet side,
the fogging apparatus (1) further comprising at least one supply for dispensing the medium to be atomized (45) and an air supply duct (5) extending from an air flow source (30) to an air supply opening, the air flow source being adapted to, in operation, generate an air flow,
the air supply duct (5) comprises a secondary chamber (40), which secondary chamber extends substantially from the supply side of the atomizing chamber (10) in the direction of the outlet side of the atomizing chamber (10),
the at least one supply for dispensing the medium to be atomized (45) is located in the rear wall at the supply side of the atomizer chamber (10),
**characterised in that**
the air supply opening is provided in the rear wall on the supply side of the atomizer chamber (10), and wherein the air supply opening is positioned behind the medium supply opening such that the supplied air flow carries along the atomized medium, and the air flow is fed through an air heating unit (35) into the air supply duct (5) and wherein at least a portion of the air supply duct (5) is configured to be in a heat exchange contact with the atomizer chamber wall.

2. Fogging apparatus according to claim 2, **characterized in that** the secondary at least partially encloses the atomizing chamber (10).

3. Fogging apparatus according to any one of claims 1-2, **characterized in that** an inner wall of the secondary chamber (40) is formed by the atomizing chamber wall of the atomizer chamber (10).

4. Fogging apparatus according to any one of claims 2-3, **characterized in that** the atomizer chamber (10) and the secondary chamber (40) are formed substantially cylindrical and are positioned substantially concentrically with respect to each other.

5. Fogging apparatus according to any one of preceding claims, **characterized in that** the supply side comprises a sealing body in which receiving means (50) are provided for detachable receipt of the supply for dosing of the medium to be atomized.

6. Fogging apparatus according to any one of preceding claims, **characterized in that** the supply comprises a nozzle.

7. Fogging apparatus according to any one of preceding claims, **characterized in that** the outlet side comprises at least one aperture which is connected to a substantially cylindrically extending fog outlet (15, 20).

8. Fogging apparatus according to claim 7, **characterized in that** the fog outlet (15, 20) is tapered at least once.

9. Fogging apparatus according to any one of preceding claims, **characterized in that** the supply for dispensing the medium to be atomized (45) is connected via a supply channel (65) to a supply unit (60), from which by means of a pump device, a quantity of medium to be atomized can be supplied to the atomizing chamber (10).

10. Fogging apparatus according to claim 9, **characterized in that** the supply unit (60) comprises a quantity of medium to be atomized, wherein the medium is chosen from the group consisting of anti-sprout agent, plant protection agent, disinfectant and pesticide.

11. Fogging apparatus according to any one of preceding claims, **characterized in that** it further comprises an electronic control unit (70), which control unit generates a control signal based on at least a temperature signal, to control at least one of an air flow velocity, an air flow temperature and a supply velocity of the medium to be atomized.

12. Fogging apparatus according to claim 11, **characterized in that** the electronic control unit (70) is configured such that during the initialization of the fogging apparatus, the air heating unit is switched on to substantially maximum power, the air flow source is switched on to a sub maximum power, wherein the air flow velocity is increased during the warmup of the fogging apparatus and wherein the supply of the medium to be atomized is switched on before the maximum temperature is reached within the atomizer chamber.

13. Storage facility (100) for agricultural products (120), in particular tuberous crop products, comprising a floor (101) for receiving a quantity of agricultural products, which floor is provided with a ventilation grid (101, 105) having openings for passing a cooled airflow through the storage, **characterized in that** the storage space is provided with a fogging apparatus according to any one of claims 1 to 12, wherein the medium to be atomized comprises an anti-sprout agent.

14. Crop nursery (200) for agricultural crops, in particular greenhouse horticulture, **characterized in that** the culture space comprises at least one fogging apparatus according to any one of claims 1 to 12.

## Patentansprüche

1. Nebelverfahrenseinrichtung (1) zum Zerstäuben eines Mediums, umfassend eine Zerstäuberkammer (10), die durch eine Zerstäuberkammerwand definiert ist, die sich im Wesentlichen von einer Versorgungsseite zu einer distalen Auslassseite erstreckt,
die Nebelverfahrenseinrichtung (1) ferner umfassend mindestens eine Zufuhr zum Abgeben des zu zerstäubenden (45) Mediums und einen Luftzufuhrkanal (5), der sich von einer Luftstromquelle (30) zu einer Luftzufuhröffnung erstreckt, wobei die Luftstromquelle angepasst ist, um, im Betrieb, einen Luftstrom zu erzeugen,
der Luftzufuhrkanal (5) eine sekundäre Kammer (40) umfasst, wobei die sekundäre Kammer sich im Wesentlichen von der Zufuhrseite der Zerstäubungskammer (10) in die Richtung der Auslassseite der Zerstäubungskammer (10) erstreckt,
die mindestens eine Zufuhr zum Abgeben des zu zerstäubenden (45) Mediums sich in der Rückwand an der Zufuhrseite der Zerstäuberkammer (10) befindet,
**dadurch gekennzeichnet, dass** die Luftzufuhröffnung in der Rückwand auf der Zufuhrseite der Zerstäuberkammer (10) bereitgestellt ist, und wobei die Luftzufuhröffnung hinter der Medienzufuhröffnung derart positioniert ist, dass der zugeführte Luftstrom entlang des zerstäubten Mediums führt, und der Luftstrom durch eine Luftheizeinheit (35) hindurch in den Luftzufuhrkanal (5) eingespeist wird und wobei mindestens ein Abschnitt des Luftzufuhrkanals (5) konfiguriert ist, um in einem Wärmeaustauschkontakt mit der Zerstäuberkammerwand zu sein.

2. Nebelverfahrenseinrichtung nach Anspruch 2,
**dadurch gekennzeichnet, dass** die sekundäre mindestens teilweise die Zerstäubungskammer (10) umschließt.

3. Nebelverfahrenseinrichtung nach einem der Ansprüche 1 bis 2,
**dadurch gekennzeichnet, dass** eine Innenwand der sekundären Kammer (40) durch die Zerstäubungskammerwand der Zerstäuberkammer (10) ausgebildet ist.

4. Nebelverfahrenseinrichtung nach einem der Ansprüche 2 bis 3,
**dadurch gekennzeichnet, dass** die Zerstäuberkammer (10) und die sekundäre Kammer (40) im Wesentlichen zylindrisch ausgebildet sind und im Wesentlichen konzentrisch zueinander positioniert sind.

5. Nebelverfahrenseinrichtung nach einem der vorstehenden Ansprüche, **dadurch gekennzeichnet, dass** die Zufuhrseite einen Dichtungskörper umfasst, in dem Aufnahmemittel (50) für eine lösbare Aufnahme der Zufuhr zum Dosieren des zu zerstäubenden Mediums bereitgestellt sind.

6. Nebelverfahrenseinrichtung nach einem der vorstehenden Ansprüche, **dadurch gekennzeichnet, dass** die Zufuhr eine Düse umfasst.

7. Nebelverfahrenseinrichtung nach einem der vorstehenden Ansprüche, **dadurch gekennzeichnet, dass** die Auslassseite mindestens eine Öffnung umfasst, die mit einem im Wesentlichen zylindrisch erstreckenden Nebelauslass (15, 20) verbunden ist.

8. Nebenverfahrenseinrichtung nach Anspruch 7,
**dadurch gekennzeichnet, dass** der Nebelauslass (15, 20) mindestens einmal verjüngt ist.

9. Nebelverfahrenseinrichtung nach einem der vorstehenden Ansprüche, **dadurch gekennzeichnet, dass** die Zufuhr zum Abgeben des zu zerstäubenden (45) Mediums über einen Zufuhrkanal (65) mit einer Zufuhreinheit (60) verbunden ist, von der mittels einer Pumpvorrichtung eine zu zerstäubende Menge an Medium der Zerstäubungskammer (10) zugeführt werden kann.

10. Nebelverfahrenseinrichtung nach Anspruch 9,
**dadurch gekennzeichnet, dass** die Zufuhreinheit (60) eine Menge an zu zerstäubendem Medium umfasst, wobei das Medium aus der Gruppe ausgewählt ist, bestehend aus Antispriessmittel, Pflanzenschutzmittel, Desinfektionsmittel und Pestizid.

11. Nebelverfahrenseinrichtung nach einem der vorstehenden Ansprüche, **dadurch gekennzeichnet, dass** es ferner eine elektronische Steuereinheit (70) umfasst, die ein Steuersignal basierend auf mindestens einem Temperatursignal erzeugt, um mindestens eines von einer Luftstromgeschwindigkeit, einer Luftstromtemperatur und einer Zufuhrgeschwindigkeit des zu zerstäubenden Mediums zu steuern.

12. Nebelverfahrenseinrichtung nach Anspruch 11,
**dadurch gekennzeichnet, dass** die elektronische Steuereinheit (70) derart konfiguriert ist, dass während der Initialisierung der Nebelverfahrenseinrichtung, die Luftheizeinheit auf im Wesentlichen maximale Leistung eingeschaltet wird, die Luftstromquelle auf eine untere maximale Leistung umgeschaltet wird, wobei die Luftstromgeschwindigkeit während des Erwärmens der Nebelverfahrenseinrichtung erhöht wird und wobei die Zufuhr des zu zerstäubenden Mediums eingeschaltet wird, bevor die maximale Temperatur innerhalb der Zerstäuberkammer erreicht wird.

13. Lagervorrichtung (100) für landwirtschaftliche Produkte (120), insbesondere Wurzelnutzpflanzenprodukten, umfassend einen Boden (101) zum Aufnehmen einer Menge an landwirtschaftlichen Produkten, wobei der Boden mit einem Lüftungsgitter (101, 105) versehen ist, das Öffnungen zum Leiten eines gekühlten Luftstroms durch die Lagerung hindurch aufweist, **dadurch gekennzeichnet, dass** der Lagerraum mit einer Nebelverfahrenseinrichtung nach einem der Ansprüche 1 bis 12 versehen ist, wobei das zu zerstäubende Medium ein Antispriessmittel umfasst.

14. Nutzplfanzenschule (200) für landwirtschaftliche Nutzpflanzen, insbesondere Gewächshaushortikultur, **dadurch gekennzeichnet, dass** der Kulturraum mindestens eine Nebelverfahrenseinrichtung nach einem der Ansprüche 1 bis 12 umfasst.

## Revendications

1. Appareil de nébulisation (1) permettant d'atomiser un milieu comprenant une chambre d'atomisation (10) définie par une paroi de chambre d'atomisation s'étendant sensiblement d'un côté d'alimentation à un côté de sortie distal,
l'appareil de nébulisation (1) comprenant en outre au moins une alimentation permettant de distribuer le milieu à atomiser (45) et un conduit d'alimentation en air (5) s'étendant d'une source de flux d'air (30) à une ouverture d'alimentation en air, la source de flux d'air étant conçue, en fonctionnement, pour générer un flux d'air,
le conduit d'alimentation en air (5) comprend une chambre secondaire (40), laquelle chambre secondaire s'étend sensiblement à partir du côté alimentation de la chambre d'atomisation (10) dans la direction du côté de sortie de la chambre d'atomisation (10),
l'au moins une alimentation permettant de distribuer le milieu à atomiser (45) est localisée dans la paroi arrière au niveau du côté alimentation de la chambre d'atomisation (10),
**caractérisé en ce que** l'ouverture d'alimentation en air est fournie dans la paroi arrière sur le côté alimentation de la chambre d'atomisation (10), et l'ouverture d'alimentation en air étant positionnée derrière l'ouverture d'alimentation de milieu de telle sorte que le flux d'air alimenté entraîne le milieu atomisé, et le flux d'air est alimenté par une unité de chauffage d'air (35) dans le conduit d'alimentation en air (5) et dans lequel au moins une partie du conduit d'alimentation en air (5) est conçue pour être dans un contact d'échange thermique avec la paroi de chambre d'atomisation.

2. Appareil de nébulisation selon la revendication 2, **caractérisé en ce que** la secondaire enferme au moins partiellement la chambre d'atomisation (10).

3. Appareil de nébulisation selon l'une quelconque des revendications 1 à 2, **caractérisé en ce qu'**une paroi interne de la chambre secondaire (40) est formée par la paroi de chambre d'atomisation de la chambre d'atomisation (10).

4. Appareil de nébulisation selon l'une quelconque des revendications 2 à 3, **caractérisé en ce que** la chambre d'atomisation (10) et la chambre secondaire (40) sont formées sensiblement cylindriques et sont positionnées de manière sensiblement concentrique l'une par rapport à l'autre.

5. Appareil de nébulisation selon l'une quelconque des revendications précédentes, **caractérisé en ce que** le côté alimentation comprend un corps de scellage dans lequel des moyens de réception (50) sont fournis pour la réception détachable de l'alimentation permettant de doser le milieu à atomiser.

6. Appareil de nébulisation selon l'une quelconque des revendications précédentes, **caractérisé en ce que** l'alimentation comprend une buse.

7. Appareil de nébulisation selon l'une quelconque des revendications précédentes, **caractérisé en ce que** le côté de sortie comprend au moins un orifice qui est raccordé à une sortie de nébulisation s'étendant de façon sensiblement cylindrique (15, 20).

8. Appareil de nébulisation selon la revendication 7, **caractérisé en ce que** la sortie de nébulisation (15, 20) est effilée au moins une fois.

9. Appareil de nébulisation selon l'une quelconque des revendications précédentes, **caractérisé en ce que** l'alimentation permettant de distribuer le milieu à atomiser (45) est raccordée par l'intermédiaire d'un canal d'alimentation (65) à une unité d'alimentation (60), à partir de laquelle, au moyen d'un dispositif de pompe, une quantité de milieu à atomiser peut être alimentée à la chambre d'atomisation (10).

10. Appareil de nébulisation selon la revendication 9, **caractérisé en ce que** l'unité d'alimentation (60) comprend une quantité de milieu à atomiser, le milieu étant choisi dans le groupe constitué par agent anti-germinatif, agent de protection de plantes, désinfectant et pesticide.

11. Appareil de nébulisation selon l'une quelconque des revendications précédentes, **caractérisé en ce qu'**il comprend en outre une unité de commande électronique (70), laquelle unité de commande génère un signal de commande en fonction d'au moins un signal de température, pour commander au moins l'un parmi une vitesse de flux d'air, une température de flux d'air et une vitesse d'alimentation du milieu à atomiser.

12. Appareil de nébulisation selon la revendication 11, **caractérisé en ce que** l'unité de commande électronique (70) est configurée de telle sorte que pendant l'initialisation de l'appareil de nébulisation, l'unité de chauffage d'air est mise sous tension sensiblement à puissance maximale, la source de flux d'air est mise sous tension à une puissance sous-maximale, la vitesse de flux d'air étant augmentée pendant le préchauffage de l'appareil de nébulisation et l'alimentation du milieu à atomiser étant mise sous tension avant que la température maximale soit atteinte au sein de la chambre d'atomisation.

13. Installation de stockage (100) pour produits agricoles (120), en particulier des produits de culture tubéreux, comprenant un sol (101) permettant de recevoir une quantité de produits agricoles, lequel sol est pourvu d'une grille de ventilation (101, 105) ayant des ouvertures permettant de faire passer un flux d'air refroidi à travers le stockage, **caractérisé en ce que** l'espace de stockage est pourvu d'un appareil de nébulisation selon l'une quelconque des revendications 1 à 12, le milieu à atomiser comprenant un agent anti-germinatif.

14. Pépinière (200) pour cultures agricoles, en particulier horticulture sous serre, **caractérisée en ce que** l'espace de culture comprend au moins un appareil de nébulisation selon l'une quelconque des revendications 1 à 12.
